# EUROPEAN PATENT APPLICATION

(11) **EP 4 624 330 A1**
(43) Date of publication of application: **01.10.2025**
(21) Application number: 24167282.3
(22) Date of filing: 28.03.2024
(51) Int. Cl.: B64D 11/00, G06T 3/08, G06T 15/10, G06T 19/00, G06F 3/01, H04N 9/31

(54) **USER INTERFACE BY VIEWING ANGLE DEPENDENT SURFACE PORTIONS**

(71) Applicant: Airbus Operations GmbH, 21129 Hamburg (DE)
(72) Inventor: Wottke, David, 21129 Hamburg (DE)

(57) **Abstract**

The present invention relates to a user interface onboard an aircraft. In order to provide a facilitated way of providing information to a user, a method (100) for generating a spatially selective user interface on surface parts in an aircraft cabin is provided that comprises the following steps: selecting (102) a user perspective for a location in an aircraft cabin interior; determining (104) a graphic appearance as an interface content for the selected user perspective; projecting (106) the determined graphic appearance onto predetermined visible surfaces of the aircraft cabin interior; determining (108) visual appearances for the predetermined visible surfaces, based on the projected determined graphic appearance, to generate the determined graphic appearance for the selected user perspective; and providing (110) the predetermined visible surfaces with the determined visual appearances.

## Description

### FIELD OF THE INVENTION

The present invention relates to a method for generating a spatially selective user interface on surface parts in an aircraft cabin, to a device for generating spatially selective user interfaces on surface parts in an aircraft cabin and to an aircraft cabin.

### BACKGROUND OF THE INVENTION

Within an aircraft cabin, aircraft operation related information is communicated to passengers in many different ways. For example, loudspeakers can be arranged to allow acoustic interaction, i.e. acoustic communication like announcements from the cockpit or cabin crew to the passengers. Another example are signal lights to provide visual interaction, i.e. visual communication like indicating the message to fasten seat belts or indicating an occupational status of a lavatory. Further ways of communication can be passenger assigned displays in the back sides of head rests or signaling lights in a cabin floor marking the way to emergency exits. However, it has been shown that the plurality of information provided to the user can be complex and the different means can be cumbersome to install, also meaning additional costs and weight.

### SUMMARY OF THE INVENTION

There may thus be a need for facilitated ways of providing information to a user.

The object of the present invention is solved by the subject-matter of the independent claims; further embodiments are incorporated in the dependent claims. It should be noted that the following described aspects of the invention apply also for the method for generating a spatially selective user interface on surface parts in an aircraft cabin, for the device for generating spatially selective user interfaces on surface parts in an aircraft cabin and for the method for aircraft cabin.

According to the present invention, a method for generating a spatially selective user interface on surface parts in an aircraft cabin is provided. The method comprises the following steps:
- Selecting a user perspective for a location in an aircraft cabin interior;
- Determining a graphic appearance as an interface content for the selected user perspective;
- Projecting the determined graphic appearance onto predetermined visible surfaces of the aircraft cabin interior;
- Determining visual appearances for the predetermined visible surfaces, based on the projected determined graphic appearance, to generate the determined graphic appearance for the selected user perspective; and
- Providing the predetermined visible surfaces with the determined visual appearances.

As an effect, a user interface is provided by existing surfaces. The interface is more or less exclusively effective for the selective point of view. In other words, the user is provided with the interface only from the selected point of view. From other positions within the cabin, the interface is less effective, or even not at all.

As an advantage, a directional-selective user interface is provided enabling to provide information in a targeted manner. For example, the direction and location of the regular aircraft doors and of the emergency exits can be provided for users that look down the aisle, while a passenger looking in a different direction such as towards the cabin side walls is not provided with this information.

The predetermined visible surfaces with the determined visual appearances provide a spatially selective user interface based on existing surfaces, meaning no additional installation effort besides the providing of the visual appearances on the surface parts. The spatially selective user interface also results in a less complex information receiving situation of the user, i.e. the passenger is provided with the information when it is desired and useful to provide such information, while in another user perspective, the information is not provided. As an effect, information is provided to the user in a facilitated way.

According to an example, the interface content comprises data related to at least one of the group of aircraft, flight, travel and safety.

According to an example, the graphic appearance is a user perspective selected appearance. Further, the interface content is provided with a restricted viewing angle.

According to an example, the predetermined surfaces with their respective determined visual appearances provide a perspective dependent formation composing the interface content for a viewing range comprising the selected user perspective and location while representing contentless appearances outside the viewing range.

According to an example, the step of projecting the determined graphic appearances onto the predetermined visible surfaces comprises:
- Transferring the selected user perspective and the location to a 3D model of the aircraft cabin; and
- Projecting the determined graphic appearance onto predetermined 3D model surfaces from the transferred user perspective and location in the 3D model.

Further, the step of determining of the visual appearances for the selected surfaces comprises:
- Determining the visual appearance of the predetermined 3D model surfaces for the selected user perspective transferred to the 3D model; and
- Transferring the visual graphic appearance of the predetermined 3D model surfaces from the 3D model to the surfaces of the aircraft cabin interior.

According to an example, the step of providing the predetermined surfaces with the determined visual appearances comprises:
- Assigning at least one 2D pattern from a plurality of predetermined 2D patterns to the determined visual appearances; and
- Applying the assigned at least one 2D pattern to the predetermined surfaces.

According to an example, the step of providing the predetermined surfaces with the determined visual appearances comprises:
- Manufacturing surface parts of the cabin interior with the determined visual appearances; and
- Placing or mounting the surface parts within the aircraft cabin interior.

According to an example, for the step of assigning at least one 2D pattern from a plurality of predetermined 2D patterns to the determined visual appearances, it is also provided:
- Assigning at least two different light patterns of an interior illumination arrangement. The at least two assigned light patterns result in at least two different graphic appearances for the selected user perspective.

According to an example, the visible surfaces comprise surfaced of at least one of the group of: cabin linings, monuments, overhead stowage bins, ceiling surfaces, window shutters, floor surfaces, upper seat rests of passenger seating structures and arm rests of passenger seating structures. At least a part of the visible surfaces is provided with a determined graphic appearance configured to provide a graphic appearance as an interface content for a selected user perspective.

According to an example, a second user perspective for a location in an aircraft cabin interior is selected. A second graphic appearance as a second interface content for the selected second user perspective is determined. The second graphic appearance is different than the first graphic appearance. The determined second graphic appearance is also projected onto the predetermined visible surfaces of the aircraft cabin interior. Visual appearances for the predetermined surfaces are determined to generate the determined graphic appearance for the selected second user perspective. The predetermined surfaces are provided with the determined visual appearances to provide the first and the second interface to the respective user perspective and location.

According to the present invention, also a computer program is provided comprising instructions which, when the program is executed by a computer, cause the computer to carry out the method of one of the preceding examples.

According to the present invention, also a computer readable medium is provided having stored the computer program of the previous example.

According to the present invention, also a device for generating spatially selective user interfaces on surface parts in an aircraft cabin is provided. The device comprises a data input, a data processor and an output interface. The data input is configured to provide a selected user perspective for a location in an aircraft cabin interior. The data processor is configured to determine a graphic appearance as an interface content for the selected user perspective. The data processor is also configured to project the determined graphic appearance onto predetermined visible surfaces of the aircraft cabin interior. The data processor is further configured to determine visual appearances for the predetermined surfaces, based on the projected determined graphic appearance, to generate the determined graphic appearance for the selected user perspective. The output interface is configured to provide data for modifications of the predetermined surfaces to generate the determined visual appearances.

According to the present invention, also an aircraft cabin is provided. The aircraft cabin has a plurality of visible surfaces comprising at least one of the group of cabin linings, monuments, stowage bins, ceiling surfaces and floor surfaces. At least a part of the visible surfaces is provided with a determined graphic appearance configured to provide a graphic appearance as an interface content for a selected user perspective.

According to an example, an interior illumination arrangement is provided that is configured to provide at least two different light patterns for illuminating at least a part of the visible surfaces. The visible surfaces are configured to provide at least two different graphic appearances for the selected user perspective depending on the provided light pattern.

According to an aspect, a user interface is provided based on viewing angle dependent surface portions.

According to an aspect, surface portions are provided with pieces or parts of the information to be displayed as interface, but these surface portions may be scattered across different spatial parts such that they are shown independently from each other from other perspectives than the selected perspectives.

According to an aspect, a user interface is provided by viewing angle dependent surface portions.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 shows basic steps of an example of a method for generating a spatially selective user interface on surface parts for a selected user perspective in an aircraft cabin.
Fig. 2 schematically shows an example of a device for generating spatially selective user interfaces on surface parts in an aircraft cabin.
Fig. 3 shows another example of a method for generating a spatially selective user interface of Fig. 1.
Fig. 4 shows a further example of the method of Fig. 1.
Fig. 5 shows a still further example of the method of Fig. 1.
Fig. 6 shows another example of the method for generating a spatially selective user interface.
Fig. 7 shows an example of the method for generating a spatially selective user interface for a first and a second user perspective.
Fig. 8 shows an example of an aircraft cabin in a perspective view.
Fig. 9 shows an example of an aircraft cabin in a perspective view with a spatially selective user interface.
Fig. 10 shows an example of an aircraft in a cross-section.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

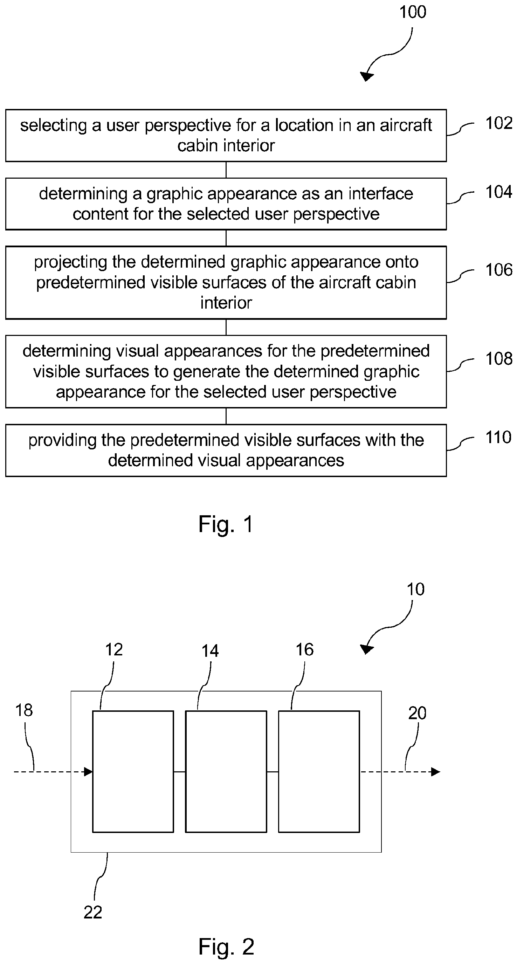

Fig. 1 shows basic steps of an example of a method 100 for generating a spatially selective user interface on surface parts for a selected user perspective in an aircraft cabin. The method 100 comprises the following steps:
- In a first step 102, a user perspective is selected for a location in an aircraft cabin interior.
- In a second step 104, a graphic appearance is determined as an interface content for the selected user perspective.
- In a third step 106, the determined graphic appearance is projected onto predetermined visible surfaces of the aircraft cabin interior.
- In a fourth step 108, visual appearances for the predetermined visible surfaces are determined, based on the projected determined graphic appearance, to generate the determined graphic appearance for the selected user perspective.
- In a fifth step 110, the predetermined visible surfaces are provided with the determined visual appearances.

The fifth step 110 of providing the selected surfaces with the determined visual appearances can also be referred to as preparing, producing, fabricating, or generating the selected surfaces with the determined visual appearances.

The term "spatially selective" user interface refers to an interface providing technical content to a user only in a selected spatial arrangement, i.e. from a selected perspective, while providing only abstract patterns from other perspectives.

The term "user interface" refers to a composed visual appearance that provides content like information or guidance to a user. The user interface provides a display function to the user for the selected perspective, while being simply surface portions outside the selected surface.

The term "surface parts" refers to portions of components that are visible to the user inside the cabin.

The term "graphic appearance" refers to the display function, i.e. to what is intended to be presented to the user.

The term "interface content" refers to what is provided to the user, such as what information or what guidance is intended to be composed.

The term "predetermined visible surfaces" refers to a plurality of different surface parts that are suitable for being provided with the determined appearance. For example, front and lower sides of overhead bins, ceiling panels above the aisles, sidewall linings or covers, cabin-facing walls of monuments like stowage compartments, lavatories, galleys or the like and class dividers.

The term "visual appearances" refers to how the surface should look like. For example, different colors, different hues, different brightness and intensity, different patterns and different reflective properties can contribute to the visual appearances.

The term "providing the predetermined visible surfaces with the determined visual appearances" refers to applying the visual appearances to the respective surface parts. For example, printed foils can be applied to existing surface. Or surfaces can be provided with determined patterns and colors. Another example are "printed" carpets, i.e. carpets that have a location specific appearance. As an example, deep-dye technology is applied in carpet manufacturing. Such printed carpets can be understood as customized carpets, similar to printed foils.

Fig. 2 schematically shows an example of a device 10 for generating spatially selective user interfaces on surface parts in an aircraft cabin. The device 10 comprises a data input 12, a data processor 14 and an output interface 16. The data input 12 is configured to provide a selected user perspective 18 for a location in an aircraft cabin interior as an input. The data processor 14 is configured to determine a graphic appearance as an interface content for the selected user perspective. The data processor 14 is also configured to project the determined graphic appearance onto predetermined visible surfaces of the aircraft cabin interior. The data processor 14 is further configured to determine visual appearances for the predetermined surfaces, based on the projected determined graphic appearance, to generate the determined graphic appearance for the selected user perspective. The output interface 16 is configured to provide data 20 for modifications of the predetermined surfaces to generate the determined visual appearances.

In an option, the data input 12, the data processor 14 and the output interface 16 are provided in a common housing 22, data connected with each other.

In another option, the data input 12, the data processor 14 and the output interface 16 are provided as separate units, but also data connected with each other.

The term "data input" relates to providing or supplying data for data processing steps. The data input 12 can also be referred to as image data input. The data input 12 can also be referred to as data supply, as input unit or simply as input. In an example, the data input 12 is data-connectable to a data source arrangement like a graphical user interface.

The term "data processor" relates to a processor or part of a processor arrangement that is provided to conduct the computing steps using the data supplied by the data input 12. The data processor 14 can also be referred to as data processing arrangement, as processor unit or as processor. In an example, the data processor 14 is data-connected to the data input 12 and the output interface 16 in a wire-bound manner; in another option, a wireless connection is provided.

The term "output interface" relates to an interface for providing the processed or computed data for further purposes. The output interface 16 can also be referred to as output or output unit. In an example, the output interface 16 is data-connectable to a display arrangement or display device. In another example, the output interface 16 is data-connected to a display. As an example, the signals by the data processor 14 can be provided to further use by the output interface 16.

In an option, the interface content comprises data related to at least one of the group of aircraft, flight, travel and safety.

As an example, the aircraft related data comprises at least one of location information of technical aspects like exit, emergency exit, lavatory and galley.

As an example, the flight related data comprises at least one of seating class, seat rows and seat number, airline, aircraft type, model and name.

As an example, the travel related data comprises at least one of destination, origin, duration and the like.

In another option, the graphic appearance is a user perspective selected appearance; the interface content is provided with a restricted viewing angle.

The graphic appearance is a user perspective dependent appearance.

The term "user perspective selected" refers to the fact that the surfaces forming the interface are composed in the designated manner only from a certain perspective, but not from other points of view. The target appearance is dependent from the perspective, i.e. point of view, of the user.

In a further option, the predetermined surfaces with their respective determined visual appearances provide a perspective dependent formation composing the interface content for a viewing range comprising the selected user perspective and location while representing contentless appearances outside the viewing range.

The term "restricted viewing angle" refers to a range of points of view for which the appearance is given, while the appearance is not given outside that viewing range. For example, the viewing range covers viewing angles in a range of +/- 5° or +/- 10° or +/-15° around the selected viewing angle.

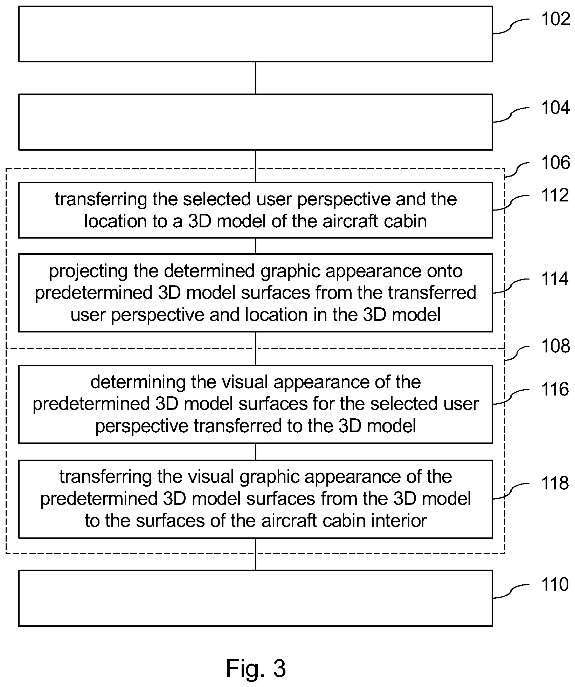

Fig. 3 shows another example of a method for generating a spatially selective user interface of Fig. 1.

As an option, the third step 106 of projecting the determined graphic appearances onto the predetermined visible surfaces comprises:
- In a first sub-step 112, the selected user perspective and the location are transferred to a 3D model of the aircraft cabin.
- In a second sub-step 114, the determined graphic appearance is projected onto predetermined 3D model surfaces from the transferred user perspective and location in the 3D model.

Further, still referring to Fig. 3, the fourth step 108 of determining of the visual appearances for the selected surfaces comprises:
- In a third sub-step 116, the visual appearance of the predetermined 3D model surfaces is determined for the selected user perspective transferred to the 3D model.
- In a fourth sub-step 118, the visual graphic appearances of the predetermined 3D model surfaces are transferred from the 3D model to the surfaces of the aircraft cabin interior.

The term "transferring to a 3D model" refers to providing a 3D model of the aircraft cabin and to map the selected user perspective from the real cabin into the 3D model.

In an option, instead of transferring the viewing perspective, the perspective and location is directly selected within the 3D model.

In another option, the desired visual appearance of the cabin is mapped onto the 3D model surfaces taking into account the selected user perspective.

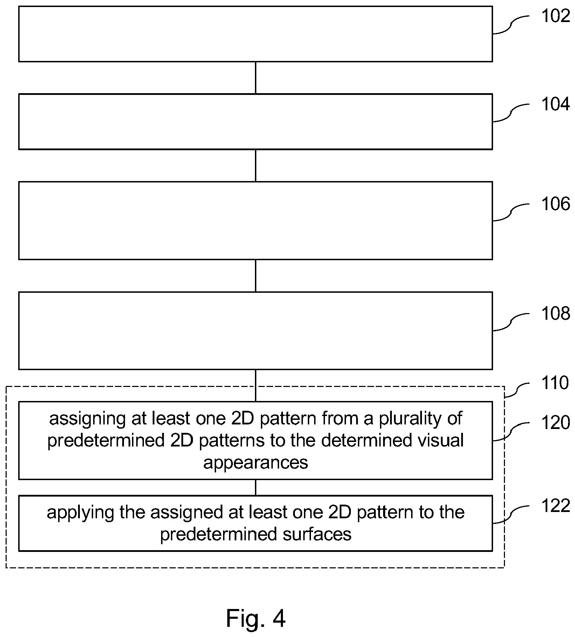

Fig. 4 shows a further example of the method of Fig. 1.

As an option, the fifth step 110 of providing the predetermined surfaces with the determined visual appearances comprises:
- In a fifth sub-step 120, at least one 2D pattern from a plurality of predetermined 2D patterns is assigned to the determined visual appearances.
- In a sixth sub-step 122, the assigned at least one 2D pattern is applied to the predetermined surfaces.

The term "2D pattern" refers to the visual appearance of the surface. However, the surface can have a 3D shape or contour. In an option, the 2D pattern can be used to create a 3D appearance.

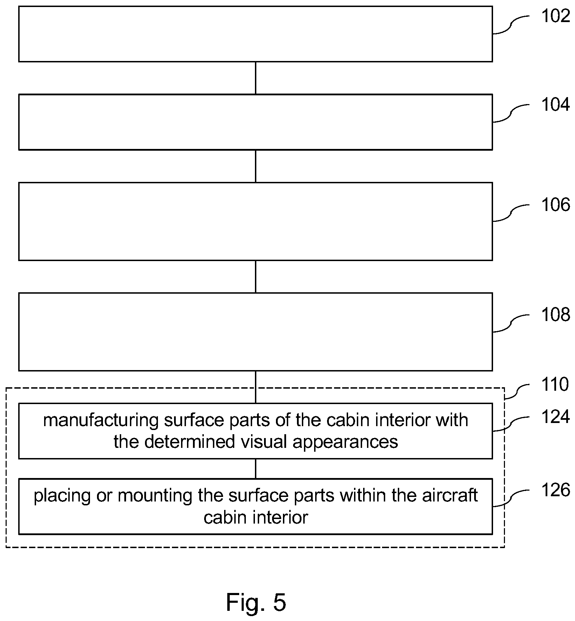

Fig. 5 shows a still further example of the method of Fig. 1.

As another option, the fifth step 110 of providing the predetermined surfaces with the determined visual appearances comprises:
- In a seventh sub-step 124, surface parts of the cabin interior are manufactured with the determined visual appearances.
- In an eighth sub-step 126, the surface parts are placed or mounted within the aircraft cabin interior.

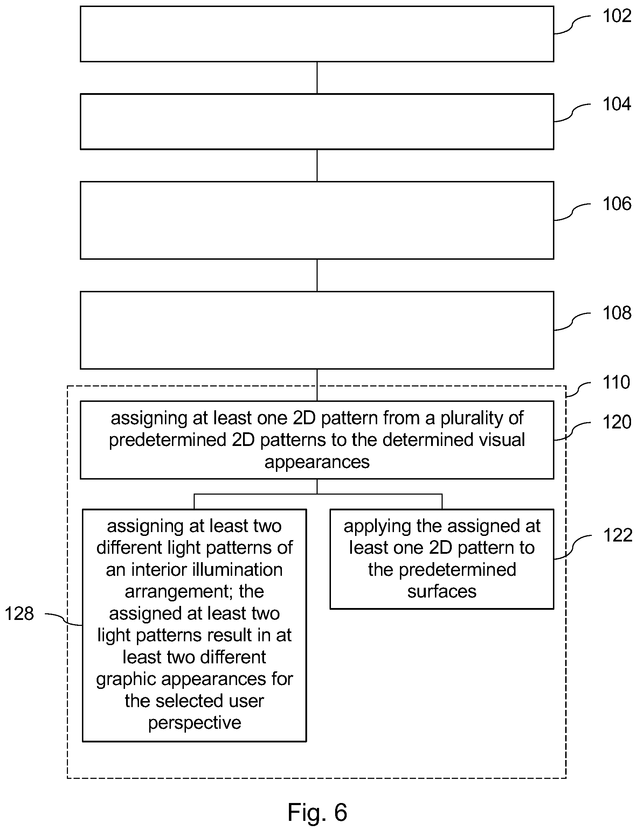

Fig. 6 shows another example of the method for generating a spatially selective user interface. As another option, for the step 120 of assigning at least one 2D pattern from a plurality of predetermined 2D patterns to the determined visual appearances, it is also provided a further sub-step 128, in which at least two different light patterns of an interior illumination arrangement are assigned. The assigned at least two light patterns result in at least two different graphic appearances for the selected user perspective.

The term "light pattern" refers to a light scheme providing a certain visual appearance of the surface.

In an option of the method, the visible surfaces comprise at least one of the group of: cabin linings, monuments, overhead stowage bins, ceiling surfaces, window shutters, floor surfaces, upper seat rests of passenger seating structures and arm rests of passenger seating structures. At least a part of the visible surfaces is provided with a determined graphic appearance configured to provide the graphic appearance as an interface content for the selected user perspective.

It is noted that the options of Fig. 3, Fig. 4, Fig. 5 and Fig. 6 can be combined in various ways with the method shown in Fig. 1.

In an example, Fig. 1 is combined with Fig. 3.

In an example, Fig. 1 is combined with Fig. 4.

In an example, Fig. 1 is combined with Fig. 5.

In an example, Fig. 1 is combined with Fig. 6.

In an example, Fig. 1 is combined with Fig. 3 and Fig. 4.

In an example, Fig. 1 is combined with Fig. 3 and Fig. 5.

In an example, Fig. 1 is combined with Fig. 3 and Fig. 6.

In an example, Fig. 1 is combined with Fig. 3, Fig. 5 and Fig. 6.

In an example, Fig. 1 is combined with Fig. 4 and Fig. 5.

In an example, Fig. 1 is combined with Fig. 4 and Fig. 6.

In an example, Fig. 1 is combined with Fig. 4, Fig. 5 and Fig. 6.

In an example, Fig. 1 is combined with Fig. 3, Fig. 4 and Fig. 5.

In an example, Fig. 1 is combined with Fig. 3, Fig. 4 and Fig. 6.

In an example, Fig. 1 is combined with Fig. 3, Fig. 4, Fig. 5 and Fig. 6.

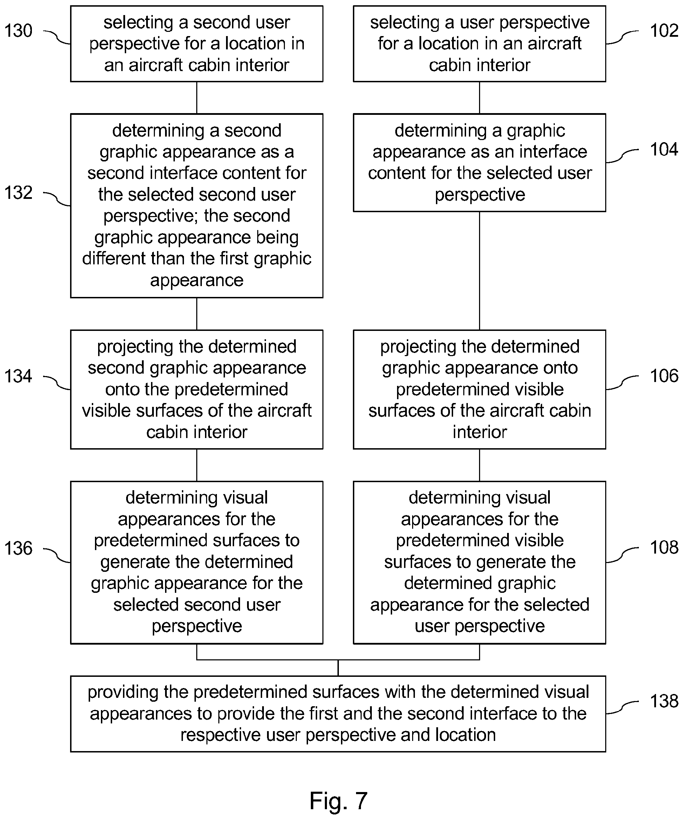

Fig. 7 shows another example of the method for generating a spatially selective user interface for a first and a second user perspective. In a so-to-speak parallel branch, of the workflow, the following additional steps are provided:
- In a first additional step 130, in which a second user perspective for a location in an aircraft cabin interior is selected.
- In a second additional step 132, a second graphic appearance as a second interface content for the selected second user perspective is determined. The second graphic appearance being different than the first graphic appearance.
- In a third additional step 134, the determined second graphic appearance is projected onto the predetermined visible surfaces of the aircraft cabin interior.
- In a fourth additional step 136, visual appearances for the predetermined surfaces are determined to generate the determined graphic appearance for the selected second user perspective.
- In a further common step 138, for both branches, the predetermined surfaces are provided with the determined visual appearances to provide the first and the second interface to the respective user perspective and location.

It is noted that the options of Fig. 7 can be combined in various ways with the method shown in Fig. 1 and the options shown in Fig. 3, Fig. 4, Fig. 5 and Fig. 6 .

In an example, Fig. 1 is combined with Fig. 7.

In an example, Fig. 1 is combined with Fig. 3 and Fig. 7.

In an example, Fig. 1 is combined with Fig. 4 and Fig. 7.

In an example, Fig. 1 is combined with Fig. 5 and Fig. 7.

In an example, Fig. 1 is combined with Fig. 6 and Fig. 7.

In an example, Fig. 1 is combined with Fig. 3, Fig. 4 and Fig. 7.

In an example, Fig. 1 is combined with Fig. 3, Fig. 5 and Fig. 7.

In an example, Fig. 1 is combined with Fig. 3, Fig. 6 and Fig. 7.

In an example, Fig. 1 is combined with Fig. 3, Fig. 5, Fig. 6 and Fig. 7.

In an example, Fig. 1 is combined with Fig. 4, Fig. 5 and Fig. 7.

In an example, Fig. 1 is combined with Fig. 4, Fig. 6 and Fig. 7.

In an example, Fig. 1 is combined with Fig. 4, Fig. 5, Fig. 6 and Fig. 7.

In an example, Fig. 1 is combined with Fig. 3, Fig. 4, Fig. 5 and Fig. 7.

In an example, Fig. 1 is combined with Fig. 3, Fig. 4, Fig. 6 and Fig. 7.

In an example, Fig. 1 is combined with Fig. 3, Fig. 4, Fig. 5, Fig. 6 and Fig. 7.

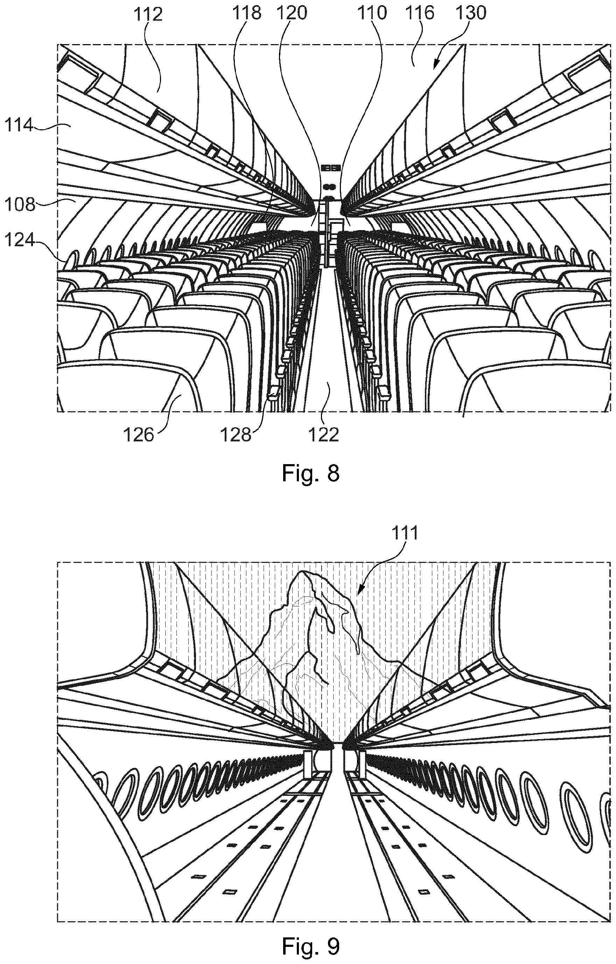

Fig. 8 shows an example of an aircraft cabin 100 in a perspective view. The aircraft cabin 100 has a plurality of visible surfaces 102. At least a part of the visible surfaces 102 is provided with a determined graphic appearance 104 configured to provide a graphic appearance 106 as an interface content for a selected user perspective.

The visible surfaces 102 comprise at least one of the group of cabin linings 108, monuments 110, front sides 112 or lower sides 114 of stowage bins, ceiling surfaces 116, class dividers 118, frontend walls 120 and floor surfaces 122. In an option, the visible surfaces 102 also comprise window shutters 124, also called window blinds.

In an option, the visible surfaces also comprise portions of upper seat rests 126 or arm rests 128 of passenger seating structures.

As an option, an interior illumination arrangement 130 is provided that is configured to provide at least two different light patterns for illuminating at least a part of the visible surfaces. The visible surfaces are configured to provide at least two different graphic appearances for the selected user perspective depending on the provided light pattern.

As an example, the visible surfaces are provided with a first graphic appearance in a first color scheme and a second graphic appearance in a second color scheme. The interior illumination provides a first light pattern with a first color setup and a second light pattern with a second color setup. The first color scheme is designed such that it is primarily visible in the first light pattern with the first color setup and not visible, or at least essentially less visible in the second light pattern with the second color setup. The second color scheme is designed such that it is primarily visible in the second light pattern with the second color setup and not visible, or at least essentially less visible in the first light pattern with the first color setup.

Fig. 9 shows an example of an aircraft cabin in a perspective view with a spatially selective user interface 111. As an example, a mountain silhouette is shown on upper surface portions for illustration purposes. It must be noted that when viewing the ceiling panels from below, i.e. not in the selected user perspective, the mountain silhouette is not or at least essentially less visible. A projection of technical data in the floor area can be provided in a similar manner.

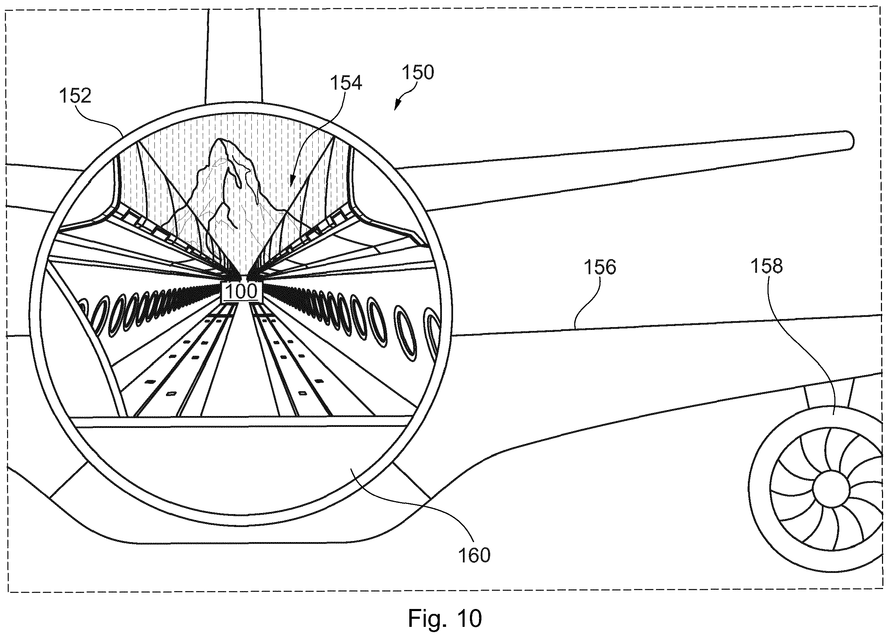

Fig. 10 shows an example of an aircraft 150 in a cross-section. The aircraft 150 has a fuselage 152 and a cabin area 154 arranged in the fuselage 152. The cabin area 154 is provided as an aircraft cabin 100 according to one of the examples above. Further, a wing structure 156 with an engine 158 is indicated. A cargo area 160 can be provided below the cabin area 154.

According to an example, a computer program is provided that comprises instructions which, when the program is executed by a computer, cause the computer to carry out the method of one of the examples above on an appropriate system.

According to an example, a computer readable medium is provided having stored the computer program of the preceding example.

In an example, a computer program or program element for controlling an apparatus according to one of the examples above is provided, which program or program element, when being executed by a processing unit, is adapted to perform the method steps of one of the method examples above.

In another exemplary embodiment of the present invention, a computer program or a computer program element is provided that is characterized by being adapted to execute the method steps of the method according to one of the preceding embodiments.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an update turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A method (100) for generating a spatially selective user interface on surface parts in an aircraft cabin, the method comprising the following steps:
- selecting (102) a user perspective for a location in an aircraft cabin interior;
- determining (104) a graphic appearance as an interface content for the selected user perspective;
- projecting (106) the determined graphic appearance onto predetermined visible surfaces of the aircraft cabin interior;
- determining (108) visual appearances for the predetermined visible surfaces, based on the projected determined graphic appearance, to generate the determined graphic appearance for the selected user perspective; and
- providing (110) the predetermined visible surfaces with the determined visual appearances.

2. Method according to claim 1, wherein the interface content comprises data related to at least one of the group of aircraft, flight, travel and safety.

3. Method according to claim 1 or 2, wherein the graphic appearance is a user perspective selected appearance, and wherein the interface content is provided with a restricted viewing angle.

4. Method according to claim 1, 2 or 3, wherein the predetermined surfaces with their respective determined visual appearances provide a perspective dependent formation composing the interface content for a viewing range comprising the selected user perspective and location while representing contentless appearances outside the viewing range.

5. Method according to one of the preceding claims, wherein the step of projecting the determined graphic appearances onto the predetermined visible surfaces comprises:
- transferring (112) the selected user perspective and the location to a 3D model of the aircraft cabin; and
- projecting (114) the determined graphic appearance onto predetermined 3D model surfaces from the transferred user perspective and location in the 3D model; and wherein the step of determining of the visual appearances for the selected surfaces comprises:
- determining (116) the visual appearance of the predetermined 3D model surfaces for the selected user perspective transferred to the 3D model; and
- transferring (118) the visual graphic appearance of the predetermined 3D model surfaces from the 3D model to the surfaces of the aircraft cabin interior.

6. Method according to one of the preceding claims, wherein the step of providing the predetermined surfaces with the determined visual appearances comprises:
- assigning (120) at least one 2D pattern from a plurality of predetermined 2D patterns to the determined visual appearances; and
- applying (122) the assigned at least one 2D pattern to the predetermined surfaces.

7. Method according to one of the preceding claims, wherein the step of providing the predetermined surfaces with the determined visual appearances comprises:
- manufacturing (124) surface parts of the cabin interior with the determined visual appearances; and
- placing or mounting (126) the surface parts within the aircraft cabin interior.

8. Method according to one of the preceding claims, wherein for the step of assigning at least one 2D pattern from a plurality of predetermined 2D patterns to the determined visual appearances, it is also provided:
- assigning (128) at least two different light patterns of an interior illumination arrangement; and wherein the assigned at least two light patterns result in at least two different graphic appearances for the selected user perspective.

9. Method according to one of the preceding claims, wherein the visible surfaces comprise at least one of the group of: cabin linings, monuments, overhead stowage bins, ceiling surfaces, window shutters, floor surfaces, upper seat rests of passenger seating structures and arm rests of passenger seating structures; and
wherein at least a part of the visible surfaces is provided with a determined graphic appearance configured to provide a graphic appearance as an interface content for a selected user perspective.

10. Method according to one of the preceding claims, wherein a second user perspective for a location in an aircraft cabin interior is selected (130);
wherein a second graphic appearance as a second interface content for the selected second user perspective is determined (132); the second graphic appearance being different than the first graphic appearance;
wherein the determined second graphic appearance is projected (134) onto the predetermined visible surfaces of the aircraft cabin interior;
wherein visual appearances for the predetermined surfaces are determined (136) to generate the determined graphic appearance for the selected second user perspective; and
wherein the predetermined surfaces are provided (138) with the determined visual appearances to provide the first and the second interface to the respective user perspective and location.

11. Computer program comprising instructions which, when the program is executed by a computer, cause the computer to carry out the method of one of the preceding claims.

12. Computer readable medium having stored the computer program of claim 11.

13. A device (10) for generating spatially selective user interfaces on surface parts in an aircraft cabin, the device comprising:
- a data input (12);
- a data processor (14); and
- an output interface (16);
wherein the data input is configured to provide a selected user perspective for a location in an aircraft cabin interior;
wherein the data processor is configured to determine a graphic appearance as an interface content for the selected user perspective; to project the determined graphic appearance onto predetermined visible surfaces of the aircraft cabin interior; to determine visual appearances for the predetermined surfaces, based on the projected determined graphic appearance, to generate the determined graphic appearance for the selected user perspective; and
wherein the output interface is configured to provide data for modifications of the predetermined surfaces to generate the determined visual appearances.

14. An aircraft cabin (100) with a plurality of visible surfaces (102) comprising at least one of the group of: cabin linings, monuments, stowage bins, ceiling surfaces and floor surfaces;
wherein at least a part of the visible surfaces is provided with a determined graphic appearance (104) configured to provide a graphic appearance as an interface content for a selected user perspective.

15. Aircraft cabin according to claim 14, wherein an interior illumination arrangement (130) is provided that is configured to provide at least two different light patterns for illuminating at least a part of the visible surfaces; and
wherein the visible surfaces are configured to provide at least two different graphic appearances for the selected user perspective depending on the provided light pattern.
